# FASCICULE DE BREVET EUROPEEN

(11) **EP 3 692 625 B1**
(45) Date de publication et mention de la délivrance du brevet: **05.04.2023**
(21) Numéro de dépôt: 18796487.9
(22) Date de dépôt: 04.10.2018
(51) Int. Cl.: H02M 7/00, B05D 1/18, B05D 1/22, B05D 1/24, H01F 41/12, H01R 25/16, H02B 1/20, H02G 5/00

(54) **CONNECTEUR MULTICOUCHE ISOLE PAR IMPREGNATION DE RESINE**
IMPRÄGNIERHARZISOLIERTER MEHRLAGENVERBINDER
MULTILAYER CONNECTOR ISOLATED BY RESIN IMPREGNATION

(30) Priorité: 06.10.2017 FR 1759369
(43) Date de publication de la demande: 12.08.2020
(73) Titulaire: Auxel, 59147 Gondecourt (FR); Université d'Artois, 62030 Arras (FR)
(72) Inventeur: ROGER, Daniel, 62126 Vimille (FR); WECXSTEEN, Jean-François, 62400 Béthune (FR); DUCHESNE, Stéphane, 62660 Beuvry (FR); VELU, Gabriel, 62890 Audrehem (FR)
(74) Mandataire: Matkowska, Franck
(86) Numéro de dépôt international: PCT/FR2018/000230
(87) Numéro de publication internationale: WO 2019/068968

(56) Documents cités:
- FR-A1- 2 407 588
- GB-A- 695 922
- JP-A- 2013 144 277
- JP-B1- S 507 628
- US-A- 3 995 103
- US-A- 4 587 133
- US-A- 4 885 187
- US-A1- 2012 242 442

## Description

### Domaine technique de l'invention

L'invention se rapporte au domaine technique des installations électriques, des conducteurs et de la distribution de puissance, ainsi qu'au domaine des appareils et méthodes pour la fabrication de tels dispositifs.

Plus particulièrement, l'invention concerne entre autres d'une part un connecteur multicouche encore appelé « busbar » laminé isolé électriquement par imprégnation de résine et d'autre part le procédé de fabrication dudit « busbar ».

### Art antérieur

On entend usuellement par « busbar laminé » un dispositif d'interconnexion électrique, qui a pour fonctions de raccorder électriquement des éléments constitutifs d'un convertisseur statique d'énergie électrique ; mais aussi d'assurer la connectique de raccordement prévue à l'extérieur dudit convertisseur.

Ce raccordement intervient dans plusieurs contextes par exemple :
- entre des modules de puissance comme : des transistors bipolaire à grille isolée (IGBT : Insulated Gate Bipolar Transistor), des thyristors commuté à gâchette intégrée (IGCT : Integrated gate-commutated thyristor), des diodes, et des composants passifs comme des condensateurs ou des filtres ; mis en oeuvre au sein de ce convertisseur statique d'énergie électrique, notamment dans la gamme de puissance typique allant de 50kW (kilowatt) à 8 MW (mégawatt),
- lorsque le connecteur multicouche est directement encapsulé à l'intérieur des modules de puissances : entre des circuits semi-conducteurs, et/ou entre des circuits semi-conducteurs et des connexions externes (bornes de raccordement), notamment dans la gamme de puissance typique allant de 50kW (kilowatt) à 200 kW (kilowatt).

Le connecteur multicouche laminé a également pour fonction de supporter mécaniquement les divers éléments en jeu.

Les connecteurs multicouches laminés sont, de manière générale, constitués d'un complexe de conducteurs plats et de matériau(x) isolant(s). Néanmoins, le terme « busbar » peut aussi être aussi être utilisé pour désigner un unique conducteur plat.

On entend par conducteur plat, un conducteur tel que l'une de ses dimensions (préférentiellement son épaisseur) est beaucoup plus faible que les autres. Un tel conducteur peut être plan ou coudé.

Cet empilement de conducteurs plats de différentes phases électriques justifie la principale raison d'être du connecteur laminé par rapport à des barres de connexions ou des câbles électriques classiques ; à savoir une inductance faible.

A titre d'exemple, un connecteur laminé peut consister en un assemblage de plusieurs plaques conductrices, chaque plaque correspondant à une phase électrique. Des lumières pratiquées dans les plaques permettent le raccordement des composants disposés sur une face avec les autres plaques situées en dessous. Les composants sont le plus souvent montés par vissage. Ils existent aussi des pattes de connexions permettant le raccordement avec l'extérieur du convertisseur.

Le plus souvent, l'isolation électrique entre les différentes plaques conductrices est réalisée par des films isolants électriques de type polyéthylène téréphtalate (PET), polynaphtalate d'éthylène) (PEN), polyimide (PI) ...

Usuellement, le(s)dit(s) film(s) isolant(s) est soit empilé (intercalé entre des conducteurs, on parle de « busbar » laminés empilés ou « stacké »), soit contrecollé sur le conducteur plat (« busbar » laminé contrecollé).

Ces technologies présentent plusieurs désavantages présentés ci-après.

Dans le cas du « busbar » « stacké » ou empilé, il faut prévoir un dispositif de maintien géométrique de ses éléments au moins jusqu'à son montage dans le convertisseur. Ce dispositif se présente généralement sous forme de pièces de fixation additionnelles en matériau isolant électrique. Par ailleurs, les distances d'isolement dans l'air limitent le niveau de tension de service de convertisseurs confectionnés à base de tels connecteurs multicouches (environ 1000 volts).

Dans le cas du contrecollage, les feuilles sont le plus souvent thermocollées, ce qui nécessite par exemple l'emploi d'une presse chauffante, d'un outil conformateur et de membranes souples de répartition de pression. Un tel appareil consomme beaucoup d'énergie, ce qui représente un inconvénient technique majeur. En effet, seulement environ 1% de l'énergie consommée sert à solidariser les conducteurs plats et le(s) film(s), le reste de l'énergie étant dissipée au niveau de la carcasse métallique de la presse et de l'outil.

Dû à l'inertie thermique du système et à la barrière thermique formée par les membranes souples, le temps de production est également long (de l'ordre de 1 à 2 heures) et donc la productivité horaire faible ; alors que les besoins futurs en convertisseur statique sont en hausse (énergies renouvelables, véhicules électriques, smart-grid, ...)

Un autre problème technique rencontré lors du contre collage de films isolants concerne la qualité d'isolation du dispositif et plus spécifiquement la qualité d'isolation de ses bordures (périphérie du conducteur, bords des ouvertures prévues dans les conducteurs...). En effet, idéalement, les connecteurs laminés avec film thermocollé se fabriquent à plat et sont ensuite pliés si besoin. Le pliage postérieur présente des risques multiples : fissuration du film, fissuration du revêtement de surface (par exemple : nickelage). De plus, lors de la pose des film(s), il faut prendre garde de ne pas créer de poche d'air (cavité remplie d'air entre le film et le conducteur) ou d'interstices (film mal collé ou décollé) aux bordures, car de tels défauts génèrent l'apparition de phénomènes parasites et hautement préjudiciables tels que des phénomènes de décharges partielles (d'autant plus importantes que le champ diélectrique est élevé), qui provoquent à échéance plus ou moins longue le perçage du film isolant, et par suite l'apparition de court-circuits. La conception de connecteurs multicouches présentant un seuil d'apparition de décharges partielles élevé est donc hautement désirable.

Par ailleurs, le besoin croissant de rapidité au niveau des circuits nécessite la mise en oeuvre de composants électroniques adéquats et de plus en plus performants, par exemple à base de carbure de silicium ou nitrure de gallium. Ceux-ci introduisent des contraintes sévères pour les connecteurs multicouches, telles que :
- des valeurs d'inductance requises encore plus faibles que celles actuellement atteintes,
- une aptitude à supporter une tension de fonctionnement supérieure aux tensions actuellement rencontrées,
- une aptitude à supporter un courant commuté supérieur aux courants commutés actuellement rencontrés,
- une aptitude à supporter une température de fonctionnement supérieure aux températures actuellement atteintes.

Ainsi, afin de répondre aux contraintes précédemment évoquées, on utilise actuellement des film(s) de matériaux de plus en plus performant, par exemple des films en PolyEtherEtherKetone (PEEK) ou en Polyimide (PI), mais qui sont beaucoup plus coûteux. Egalement, la montée en température pose le problème de trouver des films et des adhésifs résistants à celle-ci.

Egalement, l'avantage technique principal de ces dispositifs, à savoir : une inductance faible (par comparaison à un câblage traditionnel), est une conséquence de leur forme aplatie. Ainsi, de manière évidente, l'évolution technologique actuelle repose sur le principe de la réduction d'échelle : il est connu d'atteindre des valeurs d'inductance de plus en plus faibles en réduisant l'épaisseur des conducteurs et des films d'isolation. Cette solution présente néanmoins une limite évidente, puisque des films plus fins sont aussi plus fragiles et délicats à manipuler et/ou coller.

Sachant en outre qu'une inductance faible permet de limiter les surtensions pendant les commutations du courant dans les interrupteurs électroniques et qu'un seuil d'apparition de décharges partielles de plus en plus élevé est requis, il est d'autant plus évident que l'amélioration des performances des connecteurs multicouches, par le choix de matériaux performants, facilement déposables et peu onéreux, est un challenge technique d'importance pour l'industrie.

On connait us2012/242442 un enroulement constitué d'éléments plats entre lesquels doit être préservé un espace pour la circulation d'air, chaque élément plat étant isolé individuellement par de la résine sous forme de poudre puis assemblés par des vis ou boulons.

On connait également us3995103 des éléments conducteurs revêtus d'un matériau isolant et utilisant une feuille isolante entre les éléments conducteurs qui sont assemblés par des boulons.

On connait fr2407588 un dispositif où on colle un conducteur en ruban sur un ruban isolant intermédiaire on plonge la barre obtenue dans un bain de résine suivant le procédé de fluidisation puis on place la barre enrobée dans une presse.

On connait JPS507628B un ensemble de jeu de barres en fixant des stratifiés en parallèle et en plongeant l'ensemble dans un bain de résine pour isoler les stratifiés.

### Description de l'invention

Comme démontré précédemment, il existe un réel besoin d'apporter une solution en réponse au problème technique de l'amélioration de l'isolation des conducteurs plats constitutifs des connecteurs laminés (notamment aux bordures) et de l'application du matériau isolant choisi, tout en conservant un coût de fabrication raisonnable et en augmentant la productivité.

L'invention décrite dans la présente demande répond à ce besoin, en proposant une solution économiquement attrayante et des performances accrues pour les connecteurs produits selon la méthode prescrite, qui s'affranchit en tout ou partie de l'usage de films.

Pour ce faire, l'invention concerne tout d'abord un procédé de fabrication d'un dispositif connecteur apte entre autres à réaliser une connexion inter ou intra convertisseur(s) statique(s) d'énergie électrique (circuits modules de puissance, condensateurs, filtres, connecteurs, ...), ledit dispositif comprenant au moins deux conducteurs plats et au moins un matériau isolant disposé entre les deux conducteurs précités, ledit procédé étant défini dans la revendication 1.

Avantageusement, on place les conducteurs dans un dispositif de positionnement n'engendrant pas de contraintes spatiales au niveau des dimensions externes dudit dispositif avant introduction de la résine.

On entend par « dispositif de positionnement n'engendrant pas de contraintes spatiales au niveau des dimensions externes dudit dispositif », un dispositif de positionnement qui n'a pas d'influence, au cours de la fabrication du dispositif et/ou au niveau du dispositif finalisé, sur les dimensions externes dudit dispositif.

A titre d'exemple non limitatif, et au contraire du dispositif de positionnement prévu par l'invention, un moule (par exemple : pour coulage ou injection) engendre des contraintes spatiales au niveau des dimensions externes d'un dispositif connecteur conçu à l'aide de celui-ci.

En effet, la conformation externe particulière au dispositif connecteur fabriqué est complémentaire à celle du moule employé. Le moule contraint (retient) spatialement (dans l'espace, en volume) la matière coulée ou injectée en son sein.

Selon l'invention, la combinaison de l'écart entre les conducteurs et les spécificités de la résine liquide qui permettent, lors de l'extraction de maintenir la résine liquide en place sans besoin de moule.

Selon l'invention, l'étape de préparation comprend avantageusement au moins une étape de pose d'au moins une épargne. Ces épargnes sont par exemple choisies de préférence dans le groupe comprenant : bouchons (par exemple : en matière élastique résistant à la chaleur, et/ou étanches, et/ou fixés mécaniquement, et/ou en matière non adhérente), adhésifs (par exemple : adhésifs pelables). Les épargnes peuvent être toutes de même nature ou être panachées. Elles peuvent être réutilisables ou à usage unique. Néanmoins, l'Homme du Métier sait choisir la nature des épargnes, et leur nombre en fonction des besoins du dispositif à fabriquer. Les épargnes sont destinées à protéger les surfaces conductrices sur lesquelles on fixe les composants, ces surfaces ne devant pas être couvertes d'isolant.

Egalement, le procédé comprend une étape consistant à disposer lesdits conducteurs plats préparés dans une position géométrique initiale dans ledit dispositif de positionnement.

Préférentiellement, ladite position géométrique initiale correspond à une position de fabrication, et encore plus préférentiellement à une position écartée Eₓ si le dispositif de positionnement est actionnable. La position initiale correspond à la position finale serrée S si le dispositif de positionnement n'est pas actionnable. Par ailleurs, selon l'invention, le procédé comprend la pose d'espaceurs d'épaisseur donnée pour maintenir un écartement choisi entre les conducteurs.

Plus préférentiellement, l'assemblage s'effectue par la résine « au travers » du dispositif de positionnement, c'est-à-dire qu'il n'est pas possible de distinguer une entrée et/ou une sortie définie pour ledit dispositif de positionnement (contrairement par exemple à un moule, qui comprend au moins une entrée pour la matière à mouler).

Selon la variante du procédé choisie, l'étape de recueil du dispositif connecteur peut entres autres nécessiter :
- de désolidariser le dispositif de positionnement (et donc le châssis, et/ou tout autre élément qui le constitue, lorsque ledit dispositif de positionnement en possède un), et/ou
- de désolidariser les épargnes si elles existent.

L'invention concerne également tout dispositif connecteur qu'il est possible d'obtenir par la mise en oeuvre du procédé précédemment décrit. Ledit dispositif connecteur est entre autres apte à réaliser une connexion inter ou intra convertisseur(s) statique(s) d'énergie électrique, c'est-à-dire qu'il est apte et susceptible d'être employé afin de réaliser une connexion :
- Intra-convertisseur, c'est-à-dire par exemple :
   o entre au moins deux modules de puissance (tels que définis précédemment) appartenant à un même convertisseur, ou
   o à l'intérieur d'un module de puissance, par exemple : entre au moins deux puces semi-conductrices, ou entre une puce semi-conductrice et une connexion externe, ou
- Inter-convertisseurs, c'est-à-dire par exemple entre au moins deux convertisseurs.

Ainsi, l'invention concerne notamment un dispositif connecteur obtenu via le procédé de fabrication proposé, ledit dispositif étant remarquable en ce qu'il comprend au moins deux conducteurs plats et au moins un matériau isolant comportant une résine d'imprégnation et faisant fonction d'isolant et de moyen d'assemblage.

Comme décrit auparavant, les dispositifs connecteurs multicouches sont, de manière générale, constitués d'un complexe de conducteurs plats et de matériau(x) isolant(s).

Selon l'invention, les conducteurs plats sont préférentiellement en cuivre ou en aluminium. Avantageusement (mais non obligatoirement) les conducteurs sont protégés par un traitement de surface, tel qu'entre autres : étamage, nickelage, argenture. Préférentiellement, les conducteurs ont une épaisseur comprise entre 1 et 4 millimètres.

Le procédé de fabrication des conducteurs (par exemple : poinçonnage, pliage, injection, coulage) importe peu, et l'Homme du Métier sait choisir le procédé le plus adapté à l'application visée.

Enfin, l'invention est employable à des fins diverses (busbars laminés de convertisseur statique d'énergie électriques, busbars laminés internes de modules semi-conducteurs de puissance...), et le Déposant revendique notamment l'utilisation de tout dispositif connecteur proposé, obtenu par la mise en oeuvre du procédé présenté, en tant que connecteur inter ou intra convertisseur(s) statique(s) d'énergie électrique.

En résumé, l'invention définit une procédé de fabrication d'un dispositif connecteur multicouches selon la revendication 1, un dispositif connecteur selon la revendication 11, moyens pour la mise en oeuvre du procédé selon la revendication 13, et une utilisation du dispositif connecteur selon la revendication 14. Les revendications dépendantes énumèrent des modes de réalisation avantageux de l'invention.

### Description des dessins

L'invention sera bien comprise à l'aide de la description ci-après (à titre d'exemple non limitatif) des dessins illustrant le dispositif d'interconnexion et le procédé de fabrication associé, où :
La figure 1 représente un dispositif de positionnement de fabrication d'un dispositif connecteur avec les conducteurs plats qui lui sont associés dans sa position initiale de fabrication et d'éventuelle(s) position(s) intermédiaire(s).
La figure 2 représente le même dispositif de positionnement avec le dispositif connecteur en position finale de fabrication. Un détail des différentes couches de vernis ou résines et conducteurs est représenté.
Les figures 3 à 5 représentent différentes étapes du cycle de fabrication du dispositif connecteur placé dans une cuve d'imprégnation.

### Description de modes généraux de réalisation de l'invention

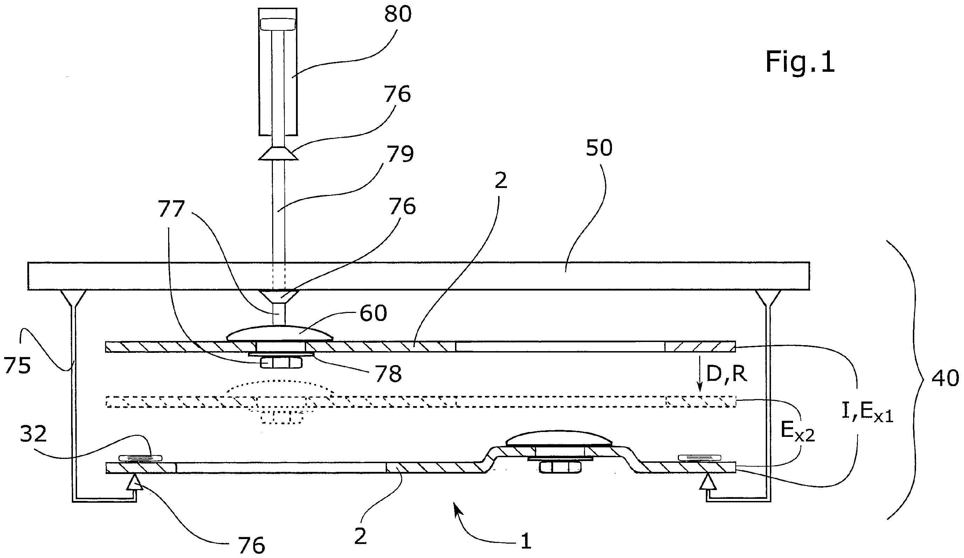

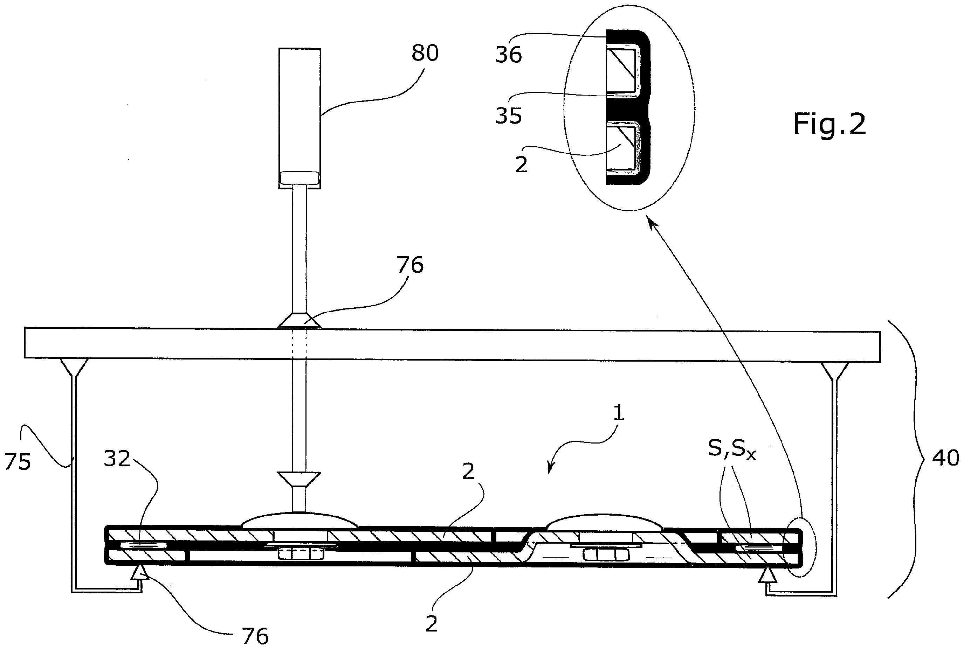

Conformément aux figures 1 à 3, le procédé selon l'invention permet la fabrication d'un dispositif connecteur 1. Ce dispositif 1 (et ses étapes/principe de fabrication) présenté aux figures 1 et 2, dans son dispositif de positionnement géométrique 40, comprend ainsi au moins deux conducteurs plats 2 et au moins un matériau isolant.

Préférentiellement, ledit dispositif 1 se présente sous forme multi-couches, c'est-à-dire qu'il est possible de distinguer l'ensemble des diverses couches de matériaux qui le constituent.

Avantageusement, le matériau isolant est un élément parmi :la résine(s), les espaceur(s) 32.

Lorsque le matériau isolant est un espaceur 32, celui-ci est préférentiellement en contact au moins partiellement avec les conducteurs 2. Néanmoins, dans des variantes complexes du dispositif, il est par exemple possible de combiner les positionnements des résines et des espaceurs ; on peut par exemple placer l'espaceur entre des conducteurs 2 revêtus de résine d'émaillage, de manière à garantir un espacement prédéfini qui sera par la suite comblé par au moins une résine d'imprégnation.

On entend par « espaceur » 32 un élément séparant au moins deux conducteurs 2 consécutifs. Eventuellement, plusieurs espaceurs 32 peuvent aussi se retrouver en contact les uns avec les autres lorsque l'arrangement du dispositif 1 le requiert. Avantageusement, ledit espaceur 32 est constitué d'au moins un matériau pas ou peu compressible. Préférentiellement, ledit espaceur 32 est constitué d'au moins un matériau isolant électrique. De manière tout à fait préférée, la surface externe dudit espaceur 32 est constituée d'un matériau isolant.

Ledit espaceur 32 peut être plein. Néanmoins, dans des variantes préférées de l'invention, ledit espaceur 32 est poreux. Dans des variantes évoluées de l'invention, le dispositif 1 comprend à la fois : espaceur(s) plein, espaceur(s) poreux. L'Homme du Métier sait choisir les caractéristiques les plus appropriées pour l'espaceur 32, selon les besoins spécifiques à l'application visée.

Avantageusement, lorsque l'espaceur 32 est plein, ledit espaceur 32 est un film de matériau isolant. Préférentiellement, ledit espaceur 32 est un film rigide, par exemple un film de mica.

Préférentiellement, dans les variantes où ledit espaceur 32 est poreux, celui-ci est par exemple un bloc de feutre. La porosité permet la retenue de la (des) résine(s) par capillarité.

Les opérations d'assemblage des conducteurs plats 2 avec des isolants 32 ont également pour objectif de stabiliser géométriquement les composants entre eux pendant tout le cycle de fabrication et de simplifier la disposition du dispositif connecteur 1 dans le dispositif de positionnement 40.

Lorsque le matériau isolant est une résine, celui-ci enrobe au moins partiellement le ou les conducteur(s) 2. Dans certaines variantes préférées de l'invention, lorsque le matériau isolant est une résine, celle-ci enrobe complètement le ou les conducteur(s) 2, c'est-à-dire que le conducteur 2 est en contact exclusivement avec ladite résine.

Préférentiellement, chaque conducteur 2 est enrobé individuellement d'au moins une couche de vernis d'émaillage 35 avant assemblage des conducteurs 2.

On entend par vernis d'émaillage 35, une résine qui présente des aptitudes particulières d'adhérence sur le conducteur électrique 2, de résistance électrique, de stabilité thermique et d'adhérence vis-à-vis des autres isolants éventuels, tel que par exemple une résine d'imprégnation.

Tout à fait préférentiellement, le vernis d'émaillage 35 comprend au moins un agent de charge sous forme de particules inorganiques de taille préférentiellement inférieure à 150 µm telles que par exemple : la silice (SiO2), l'alumine (Al2O3), la magnésie (MgO). Grâce à cet agent de charge inorganique, la résine présente une altération moindre de ses caractéristiques électriques sous contraintes de décharges partielles.

On entend par résine d'imprégnation 36, une résine sous forme liquide initialement qui présente des aptitudes de tenue mécanique, chimique, de résistance électrique, et optionnellement une bonne rétention par effet thixotrope. Tout à fait préférentiellement, la résine d'imprégnation 36 comprend au moins un agent de charge sous forme de particules inorganiques de taille préférentiellement inférieure à 150 µm telles que par exemple : la silice (SiO2), l'alumine (Al2O3), la magnésie (MgO).

Avantageusement, la résine d'imprégnation 36 est choisie parmi les résines de classe thermique supérieure (ou égal) à 180°C, telle que par exemple : résine Elmotherm VF970 ^{®}, Aquanel VF111 ^{®}.

Toute combinaison de résine 35, 36 avec ou sans agent de charge sous forme de particules inorganiques est envisageable, et l'Homme du Métier sait choisir la combinaison la plus adaptée à l'application visée.

Avantageusement, les paramètres caractéristiques du vernis d'émaillage 35 sont choisis parmi :
- viscosité dynamique : 100 à 4000 mPa.s, et/ou
- classe de température : 120°C à 240°C (120 / 140 / 155 : 180 / 200 / 220 / 240 °C),suivant la norme IEC 60085 : 2007, et/ou
- rigidité diélectrique supérieure ou égale à 30 kV/mm, et/ou
- plus préférentiellement la nature chimique est choisie parmi : polyuréthane (PUR), élastomère thermoplastique (TPE).

A titre d'exemple, la résine d'émaillage (35) peut être choisie parmi la gamme VOLTATEX WIRE^{®} (Dupont).

La résine (vernis) d'émaillage peut être réticulée l'action de la chaleur ou par l'action des rayons Ultra Violet. Pour ces derniers, on peut retenir à titre d'exemple les résines de la société Green Isolight International :
- le GII 206 qui a une classe de 280°C et qui est à base de polyester acrylate ;
- le GII 200 qui a une classe de 120°C et qui est poly-alcool modifié acrylate.

Avantageusement, les paramètres caractéristiques de la résine d'imprégnation 36 sont choisis parmi :
- viscosité dynamique : 100 à 1000 mPa.s, et/ou
- classe de température : 120°C à 240°C (120 / 140 / 155 : 180 / 200 / 220 / 240 °C),suivant la norme IEC 60085 : 2007, et/ou
- rigidité diélectrique supérieure ou égale à 30 kV/mm
- Aptitude thixotropique,
- plus préférentiellement la nature chimique est choisie parmi : époxy, polyester, polyester-imide.

A titre d'exemple, la résine d'imprégnation 36 peut être choisie parmi les gammes : VOLTATEX^{®} (Dupont), DAMISOL^{®} (VonRoll).

Un dispositif 1 tel que décrit ci-avant est fabriqué via le procédé prévu selon l'invention, qui met en oeuvre au moins un dispositif de positionnement 40 desdits conducteurs 2, ledit dispositif de positionnement 40 comprenant préférentiellement entre autres un châssis de positionnement 50.

Lors de la fabrication, l'étape de préparation des conducteurs 2 comprend au moins une étape de pose d'épargnes 60 en toute zone des conducteurs 2 qui doit rester libre de toute isolation.

Dans des variantes avancées, le dispositif de positionnement 40 comprend en outre un moyen de bridage mécanique du conducteur, associé préférentiellement au châssis 50.

Avantageusement, l'étape de disposition desdits conducteurs plats préparés 2 dans ledit dispositif de positionnement 40 comprend une étape de positionnement d'au moins un espaceur 32, ledit espaceur 32 reliant au moins deux conducteurs plats 2 entre eux.

De manière tout à fait préférée, le dispositif 1 comprend au moins un espaceur 32 poreux. Une telle caractéristique permet d'assurer :
- une bonne imprégnation de la résine 36 par capillarité, dans les variantes du procédé où l'assemblage du dispositif 1 s'effectue par imprégnation de résine 36,
- une sécurité d'absence de contact électrique entre deux conducteurs 2 consécutifs par instauration d'une distance d'écartement correspondant à l'épaisseur de l'espaceur 32.
- un effet de rétention de la résine 36 dans le cas où l'écartement inter-conducteur 2 est conséquent. Préférentiellement, on considère qu'il existe un écartement conséquent entre les conducteurs 2 lorsque l'écart est compris entre 1 et 5mm.

Préférentiellement, afin d'assurer un maintien optimal (au cours de la fabrication) des éléments constitutifs du dispositif 1 tels que les conducteurs 2 et les espaceurs 32, ledit châssis 50 comprend au moins une excroissance 75 à l'extrémité de laquelle est positionnée une butée (par exemple : butée mécanique) 76.

Avantageusement, ladite butée 76 fait office de zone de référence géométrique dans l'espace pour entre autres au moins un élément parmi : conducteur(s) plat(s) 2, espaceur 32.

Avantageusement, lesdites excroissances 75 sont en nombre suffisant pour assurer :
- un positionnement géométrique de chaque conducteur plat 2, et/ou espaceur 32 dans les variantes dédiées, par rapport audit châssis 50, et/ou,
- un maintien sans déplacement des conducteurs 2, et/ou du ou des espaceur(s) 32 dans les variantes dédiées :
   o entre eux (conducteur 2 / conducteur 2, et/ou conducteur 2 / espaceur 32, et/ou espaceur plein / espaceur poreux, et/ou
   o avec ledit châssis 50.

Après extraction du connecteur, et retrait de la buée 76, la résine flue de sorte qu'elle recouvre la zone d'appui de la butée 76. La butée 76 peut également s'appuyer sur une épargne

Concernant le bridage mécanique, celui-ci peut par exemple consister en une vis à tête 77 et une rondelle d'appui 78 passant au travers des lumières pratiquées dans le conducteur 2, le tout vissé sur une tige 79 géométriquement solidaire du châssis 50.

Avantageusement, selon une variante avancée du dispositif de positionnement selon l'invention, celui-ci est en outre apte à engendrer des contraintes spatiales au niveau des dimensions internes dudit dispositif connecteur 1, par rapprochement des conducteurs plats 2 entre eux. Ce rapprochement s'effectue préférentiellement par l'emploi d'un dispositif de positionnement 40 actionnable.

Préférentiellement, ledit dispositif de positionnement est apte à adopter plusieurs positions, c'est-à-dire que ledit dispositif de positionnement est apte à maintenir les conducteurs plats du busbar dans au moins une position de fabrication avec une orientation préférentielle :
- une ou des position(s) écartée(s) Eₓ (dont une position initiale),
- une position serrée S (correspondant à la position finale)

La (ou les) position « écartée » Eₓ correspondent à une disposition dans laquelle les différents conducteurs sont plus éloignés les uns des autres au cours de la fabrication (comparativement à leur position souhaitée dans le produit fini). La position pour laquelle l'écartement est le plus conséquent entre les conducteurs, correspond avantageusement à la position initiale I de fabrication.

La position « serrée » S correspond à la disposition des conducteurs souhaitée dans le produit fini.

Dans le cas où le dispositif de positionnement n'est pas mobile, la (ou les) position écartée et la position serrée sont confondues (notamment la position initiale et la position finale sont identiques).

Ainsi, avantageusement selon le procédé, le dispositif de positionnement 40 est mobilisable entre : au moins une position de fabrication dénommée « position écartée » Eₓ, et une position de fabrication dénommée « position serrée » S. D'autre part, le procédé est remarquable en ce qu'il comprend au moins une étape de déplacement D consistant à faire passer ledit dispositif de positionnement de ladite position écartée à ladite position serrée.

Ainsi, dans des variantes préférées du dispositif de positionnement 40, celui-ci comprend entre autres au moins un moyen de mobilisation 80, permettant l'actionnement dudit dispositif de positionnement 40, tel que par exemple : un moteur, une articulation mécanique, un vérin pneumatique.

Lorsque le procédé met en oeuvre un dispositif de positionnement 40 actionnable, le procédé peut comprendre au moins une étape de resserrement R correspondant au passage d'une position écartée Eₓ (plusieurs positions écartées peuvent être prévues) à la position serrée S.

Préférentiellement, selon le procédé, une seule position serrée est prévue, correspondant à la position finale des éléments du dispositif 1.

L'Homme du Métier sait choisir le nombre et l'ordre d'agencement des étapes de resserrement, entre-elles et vis-à-vis des autres étapes de fabrication, en fonction des caractéristiques du dispositif 1 à fabriquer et de l'application visée.

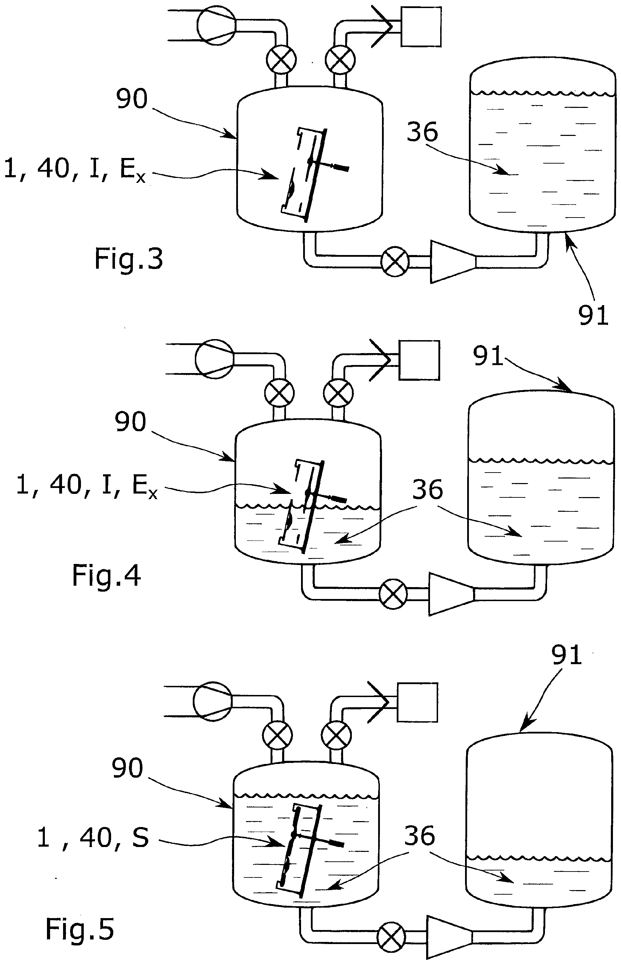

Egalement, le procédé comprend en outre avantageusement une étape consistant à disposer au moins les conducteurs plats 2 (éventuellement préparés) dans une cuve 90, comme présenté à la figure 3, apte à recevoir au moins une résine d'imprégnation 36 (étape de mise en cuve, distincte de l'étape de disposition dans le dispositif de positionnement). Par ailleurs, l'étape d'assemblage dudit dispositif 1 comprend en outre une étape d'imprégnation consistant à imprégner au moins lesdits conducteurs plats 2 avec au moins une résine d'imprégnation 36. Le procédé comprend également avantageusement une étape d'extraction X du dispositif 1 de ladite cuve 90. Ladite résine d'imprégnation 36 présente des caractéristiques physico-chimiques permettant son maintien sous forme d'une couche d'enrobage sur l'ensemble des faces accessibles desdits conducteurs plats 2 après extraction (étape d'extraction X) de ces derniers de ladite cuve 90 (préférentiellement après extraction de l'ensemble des éléments constitutifs du dispositif et/ou des moyens de fabrication tels qu'entre autres : le dispositif de positionnement 40).

Avantageusement, dans des variantes avancées du procédé, l'étape d'extraction X fait suite à une étape de vidange V de la cuve 90, ladite vidange s'effectue préférentiellement vers un réservoir tampon de vidange (éventuellement identique à la cuve tampon de réserve de résine 91 amenant la résine à la cuve d'imprégnation 90, ce qui facilite par exemple le recyclage de la matière).

Le dispositif 1 est assemblé par imprégnation de résine 36, ladite résine d'imprégnation 36 est introduite dans la cuve 90 (par exemple par le fond (le bas) ou latéralement au dispositif 1, par exemple depuis une cuve tampon de réserve de résine 91), comme présenté successivement aux figures 3 à 5 où l'on voit le niveau de résine d'imprégnation 36 monter progressivement dans la cuve 90, afin que l'imprégnation s'effectue non pas par aspersion (recouvrement du dispositif 1 « du haut vers le bas ») mais par remontée de la résine d'imprégnation 36, c'est à dire par remontée entre les éléments constitutifs du dispositif 1 (conducteur 2, espaceurs 32, etc...) et/ou entre les moyens de fabrication mis en oeuvre dans le procédé, tels que entre autres : dispositif de positionnement 40, moyen de bridage 70, etc...

Plus préférentiellement l'imprégnation s'effectue par remontée en contact, au moins en partie, avec lesdits conducteurs plats 2. Encore plus préférentiellement, par remontée autour desdits conducteurs plats 2 (enrobage complet, par exemple lorsqu'il n'y a pas d'épargnes).

Avantageusement, la vitesse de l'imprégnation est commandée par la régulation de la pression interne à la cuve 90.

Préférentiellement, la cuve 90 est une cuve fermée (directement fermée ou apte à être fermée).

Selon des variantes du procédé, la remontée de la résine d'imprégnation 36 s'effectue à pression ambiante, par capillarité. Dans ces variantes, la cuve 90 peut être fermée ou non.

D'autres variantes du procédé mettent en oeuvre une cuve 90 fermée. Dans ce cas, des sous-variantes sont prévues, selon la combinaison choisie d'étapes détaillées ci-après. Ainsi, outre les opérations de mise en cuve du dispositif connecteur 1 et de son retrait, d'ouverture et de fermeture de la cuve 90, le procédé avec cuve 90 fermée comprend entre autres au moins une étape parmi les suivantes :
- étape de mise en dépression de la cuve 90, préférentiellement à une valeur inférieure ou égale à 1 bar : cette dépression sert entre autres à l'introduction de la résine par différence de pression depuis un réservoir tampon,
- une étape de mise sous vide partiel (effectuée au moins une fois au cours du procédé de fabrication), amenant préférentiellement, la cuve 90 à une pression comprise entre 0,1 et 0,3 bars et/ou s'effectuant préférentiellement durant un laps de temps compris entre 1 et 3 minutes. Cette étape permet d'extraire les bulles d'air piégées dans le dispositif connecteur 1,
- Une étape de mise sous pression de ladite cuve 90 (effectuée au moins une fois au cours du procédé de fabrication), amenant préférentiellement la cuve 90 à une pression comprise entre 2 à 3 bars et/ou s'effectuant préférentiellement durant un laps de temps compris entre 2 à 5 minutes (cette surpression est pratiquée de manière évidente, éventuellement après l'étape de mise en dépression, et dans tous les cas après l'introduction de la résine 36 dans la cuve 90, elle permet d'acheminer la résine dans toutes les cavités du dispositif 1).

L'Homme du métier sait choisir l'ordre, la présence ou l'absence, la nature et nombre de répétition les plus adaptés pour les étapes de mise en dépression et de régulation de la pression interne de la cuve 90, mise sous vide partiel, mise sous pression, entrant dans le procédé de fabrication du dispositif 1.

Avantageusement, dans certaines variantes avancées du procédé mettant en oeuvre une cuve 90 (ouverte ou fermée), où le dispositif de positionnement (40) est actionnable, le procédé est remarquable en ce que :
- le dispositif de positionnement 40 est disposé dans la cuve 90 (étape de mise en cuve) dans une position écartée Eₓ, comme présenté aux figures 3 et 4, et
- l'étape de déplacement D, consistant à resserrer le dispositif de positionnement 40 pour rapprocher les conducteurs 2 les uns des autres jusqu'à la position finale serrée S visualisable sur la figure 5, est effectuée une fois que la résine d'imprégnation 36 a complètement imprégné le dispositif 1 (le niveau de résine 36 dans la cuve 90 permet de recouvrir complètement le dispositif 1), avant l'étape de vidange V si celle-ci existe ou sinon avant l'étape d'extraction X.

Avantageusement, dans certaines variantes avancées du procédé mettant en oeuvre une cuve 90 (ouverte ou fermée), où le dispositif 1 est assemblé par imprégnation de résine 36, le procédé de fabrication comprend en outre une étape de réticulation F de la (ou des) résine d'imprégnation 36, effectuée postérieurement à l'étape d'extraction X. La réticulation de la résine d'imprégnation 36 peut s'effectuer par exemple : spontanément à température ambiante, ou dans une étuve, ou sous l'action d'un rayonnement UV.

Avantageusement, dans certaines variantes avancées du procédé mettant en oeuvre une cuve 90 (ouverte ou fermée), l'étape de mise en cuve d'au moins un élément parmi entre autres : dispositif de positionnement 40, conducteurs plats 2, espaceur(s) 32, consiste à disposer dans ladite cuve 90 lesdits éléments de manière à ce que l'ensemble des conducteurs soient inclinés, c'est-à-dire que la normale au plan correspondant à la plus grande surface des conducteurs plats 2 est inclinée par rapport à la verticale d'un angle typique compris entre 45° et 85°.

Ou bien, avantageusement, dans d'autres variantes avancées du procédé mettant en oeuvre une cuve 90 (ouverte ou fermée), l'étape de mise en cuve d'au moins un élément parmi entre autres : dispositif de positionnement 40, conducteurs plats 2, espaceur 32, consiste à disposer dans ladite cuve 90 lesdits éléments selon une orientation préférentielle de manière à ce que la normale au plan correspondant à la plus grande surface (en termes de produit fini) du dispositif (busbar) soit inclinée par rapport à la verticale d'un angle typique compris entre 45° et 85°. Cette inclinaison permet de limiter le piégeage de bulles d'air sous une surface plane horizontale et/ou dans les recoins lors de la montée de la résine d'imprégnation.

Avantageusement, on positionne les conducteurs 2 dans une position écartée (Eₓ) tel que l'écart soit supérieur à l'épaisseur de la résine souhaitée pour ensuite rapprocher les conducteurs 2 avant l'étape de vidange si celle-ci existe ou sinon avant l'étape d'extraction de la cuve 90. Le rapprochement des conducteurs 2 permet entre autres de chasser les éventuelles bulles d'air. Le recours à une position écartée Eₓ pendant l'imprégnation évite le piégeage futur éventuel de bulles d'air entre les conducteurs 2 une fois ceux-ci en position serrée S.

Avantageusement, le procédé selon l'invention est remarquable en ce que dans des variantes avancées de l'étape de préparation des conducteurs plats 2, celle-ci comprend en outre au moins une itération du cycle d'étapes suivant :
- tout d'abord déposer une couche de vernis d'émaillage 35 d'épaisseur A, préférentiellement par trempage suivi d'un égouttage (néanmoins, toute autre méthode adaptée - en fonction de la résine choisie - peut être mise en oeuvre, telle qu'un dépôt par pulvérisation ou avec un vernis sous forme aérosol ou encore par enduction centrifuge),
- ensuite réticuler le vernis d'émaillage 35.

L'Homme du métier sait choisir le nombre d'itération du cycle d'étape présenté auparavant, de façon à obtenir une épaisseur désirée finale B de résine d'émaillage 35, enrobant lesdits conducteurs plats 2 (l'enrobage peut être effectué pour chaque conducteur individuellement, ou pour l'ensemble des conducteurs en une seule passe). Entre autres, le nombre d'itérations (et donc l'épaisseur finale B) est choisi en fonction de la tension que le dispositif doit supporter.

Préférentiellement, ladite épaisseur B est comprise entre 30 et 200 microns, afin de permettre au dispositif de fonctionner à une tension comprise entre 300 et 1250 volts. Préférentiellement, ladite épaisseur A est comprise entre 3 et 15 microns.

Un premier intérêt de ces différentes étapes A de dépôt de résine (vernis) d'émaillage 35 est d'éviter la création de micro-cavités dans l'épaisseur de l'isolant (toute micro-cavité étant susceptible de devenir le siège de décharges partielles préjudiciables à la pérennité des performances électriques de l'isolant et/ou de l'isolation).

Un deuxième intérêt est de diminuer le risque d'un manque accidentel localisé de vernis car les couches sont déposées indépendamment les unes des autres.

Un troisième intérêt sera de profiter de caractéristiques propres à chaque type de vernis, par exemple une première couche avec une aptitude d'adhérence élevée sur les surfaces conductrices, une couche suivante (résine différente) avec des performances mécaniques plus élevée.

La réticulation du vernis d'émaillage 35 peut par exemple s'effectuer spontanément à température ambiante ou dans une étuve, ou sous l'action d'un rayonnement UV.

Avantageusement, le procédé selon l'invention est remarquable en ce que dans des variantes avancées de l'étape de préparation des conducteurs plats 2, celle-ci comprend en outre au moins une étape de préparation (traitement) des surfaces, choisie par exemple entre autres parmi : dégraissage, dépoussiérage.

### Exemples de modes de réalisation privilégiés

Ci-après sont présentés succinctement deux modes de réalisation particulièrement préférés de l'invention. On se référera utilement à la description générale pour les détails concernant les étapes citées. Toutefois, la réalisation de toute variante prévue selon la description générale présentée auparavant est bien entendu envisageable.

### 1) busbar réalisé à l'aide de conducteurs « bruts » assemblés par imprégnation en cuve

Le procédé de fabrication d'un tel busbar comprend notamment les étapes suivantes :
- disposer les conducteurs 2 préparés (par exemple : dégraissés) dans le dispositif de positionnement 40, dans une position initiale écartée (position 1 et position Eₓ identique),
- disposer l'ensemble constitué par le dispositif de positionnement 40 et les conducteurs 2 dans la cuve 90 de manière à ce que la normale au plan correspondant à la plus grande surface du dispositif 1 (en tant que produit fini), soit inclinée par rapport à l'axe vertical d'un angle compris entre 45° et 85°,
- effectuer une étape de mise en dépression de la cuve 90,
- assembler les éléments constitutifs du dispositif 1 par :
   o imprégnation de résine 36, par remontée entre les éléments constitutifs du dispositif 1 et les moyens de fabrication, et
   o réalisation d'une étape de déplacement D consistant à resserrer le dispositif de positionnement 40 pour rapprocher les conducteurs 2 les uns des autres jusqu'à la position finale serrée S, et
   o réalisation d'une étape de mise sous vide partiel de la cuve 90, et
   o réalisation d'une étape de mise sous pression de la cuve 90,
- réalisation d'une étape de vidange de la cuve 90,
- réalisation d'une étape d'extraction du dispositif 1 hors de la cuve 90,
- réalisation d'une étape de réticulation de la résine d'imprégnation 36,
- recueillir le dispositif 1 en tant que produit fini.

### 2) busbar réalisé à l'aide de conducteurs émaillés assemblés par imprégnation en cuve

Le procédé de fabrication d'un tel busbar comprend notamment les étapes suivantes :
- préparer les conducteurs plats 2 par dépôt de vernis d'émaillage 35 (suivi d'une étape de réticulation dudit vernis 35, et éventuellement réitération pour obtenir plusieurs couches du vernis 35),
- disposer les conducteurs 2 préparés dans le dispositif de positionnement 40,
- disposer l'ensemble constitué par le dispositif de positionnement 40 et les conducteurs 2 dans la cuve 90 de manière à ce que la normale au plan correspondant à la plus grande surface du dispositif 1 (en tant que produit fini), soit inclinée par rapport à l'axe vertical d'un angle compris entre 45° et 85°,
- effectuer une étape de mise en dépression de la cuve 90,
- assembler les éléments constitutifs du dispositif 1 par :
   o imprégnation de résine 36 par remontée entre les éléments constitutifs du dispositif 1 et les moyens de fabrication, et
   o réalisation d'une étape de mise sous vide partiel de la cuve 90, et
   o réalisation d'une étape de mise sous pression de la cuve 90,
- réalisation d'une étape de vidange de la cuve 90,
- réalisation d'une étape d'extraction du dispositif 1 hors de la cuve 90,
- réalisation d'une étape de réticulation de la résine d'imprégnation 36,
- recueillir le dispositif 1 en tant que produit fini.

### Intérêt de la mise en oeuvre industrielle

L'ensemble des caractéristiques techniques préalablement exposées démontrent de manière évidente l'utilité et le potentiel d'application industrielle du dispositif et du procédé de fabrication proposés.

Le déposant rappelle ainsi entre autres que :
- la suppression des films de polymère et/ou des adhésifs (colle), qui ont des caractéristiques limitées en température, permet de passer à une classe thermique très supérieure :
   o à minima, la classe thermique des résines les plus courantes est de 180°C alors que les « busbars » laminés actuels sont conçus pour travailler à une température inférieure à 130°C,
   o l'usage de dispositif selon l'invention à une température encore plus élevée jusqu'à 240°C est réalisable par l'emploi de résines plus sophistiquées, disponibles sur le marché et qui répondent aux normes désirées.
- L'usage de films plus performants (type PEN, PEEK, POLY-IMIDE) n'est plus une approche pertinente, car ceux-ci sont très onéreux par rapport à une résine d'une même classe de température, par ailleurs, si la disponibilité de tels films ne pose pas de soucis, l'existence de colles à haute tenue en température adaptées pour le film des « busbars » laminés n'est pas encore une réalité industrielle évidente.
- le gain économique attendu pour un connecteur multicouche selon l'invention peut atteindre 10 à 50% compte tenu de la cherté des films à haute température
- le procédé de fabrication se prête à une production en série de « busbars », par l'emploi de cuves de grande capacité dans lesquelles plusieurs conformations de « busbars » différentes et un grand nombre de « busbars » peuvent être traités simultanément. Ainsi, le Déposant estime que la capacité de production de « busbars » est susceptible d'être multipliée d'au moins un facteur 5, par l'emploi du processus proposé, pour un montant similaire d'investissement industriel.
- Le procédé de fabrication se prête aussi à une fabrication en série de busbars à partir de conducteurs avec des géométries complexes (plis multiples, formes non planes, ...),
- le procédé de fabrication par imprégnation de résine permet la réalisation d'importantes économies d'énergie, par suppression de l'usage de presses chauffantes (avec un ratio estimé d'au moins 3 en faveur du processus proposé).
- Le procédé proposé présente la possibilité d'utiliser des vernis chargés en particules inorganiques, se dégradant moins sous contraintes de décharges partielles. Cette possibilité technique permet d'obtenir une durée de vie maitrisée en présence de décharges partielles, contrairement à la technologie actuelle qui requiert l'absence de décharges partielles.
- Le procédé proposé permet d'envisager plus aisément une démarche écologique globale, en offrant la possibilité d'utiliser des solvants aqueux en lieux et place des solvants organiques dans les résines.

## Revendications

1. Procédé de fabrication d'un dispositif connecteur multicouches (1) apte à réaliser une connexion inter ou intra convertisseur(s) statique(s) d'énergie électrique, ledit dispositif (1) comprenant au moins deux conducteurs plats (2) et au moins un matériau isolant disposé entre les deux conducteurs (2) précités, ledit procédé étant **caractérisé en ce que** :
• on positionne les conducteurs plats (2), éventuellement préparés, dans une cuve (90) en une position géométrique telle que les conducteurs (2) soient maintenus parallèles et écartés d'une valeur au moins égale à l'épaisseur de l'isolation électrique souhaitée, lesdits conducteurs (2) ayant une orientation préférentielle,
• on imprègne lesdits conducteurs plats préparés (2) avec au moins une résine d'imprégnation (36) introduite dans la cuve (90), de sorte que le niveau de résine d'imprégnation (36) monte progressivement dans la cuve (90), ladite résine d'imprégnation (36) présentant des caractéristiques physico-chimiques permettant, après extraction de la cuve, son maintien sous forme d'une couche d'enrobage sur l'ensemble des faces accessibles desdits conducteurs plats (2),
• on extrait le dispositif (1) de ladite cuve (90),
• on procède à la réticulation de la dite résine d'imprégnation (36) pour assembler les conducteurs plats au moyen de la dite résine d'imprégnation (36).

2. Procédé de fabrication d'un dispositif connecteur (1) selon la revendication 1, **caractérisé en ce qu'**on place les conducteurs (2) dans un dispositif de positionnement (40) n'engendrant pas de contraintes spatiales au niveau des dimensions externes dudit dispositif (1) avant introduction de la résine d'imprégnation (36).

3. Procédé de fabrication d'un dispositif connecteur (1) selon la revendication 1 ou 2, **caractérisé en ce qu'**on pose des épargnes (60) pour préserver des surfaces conductrices des conducteurs plats (2) d'un recouvrement par de la résine et/ou on place des espaceurs (32) pour maintenir écartés les conducteurs plats (2).

4. Procédé de fabrication d'un dispositif connecteur (1) selon l'une quelconque des revendications 1 à 3, **caractérisé en ce que** l'imprégnation s'effectue par remontée de la résine d'imprégnation (36), entre les éléments constitutifs du dispositif (1).

5. Procédé de fabrication d'un dispositif connecteur (1) selon l'une des revendications 1 à 4, **caractérisé en ce qu'**on utilise une cuve (90) fermée et le procédé comprend au moins une étape parmi : une étape de mise en dépression de la cuve (90), une étape de mise sous vide partiel de la cuve (90), une étape de mise sous pression de la cuve (90) chaque étape étant effectuée au moins une fois.

6. Procédé de fabrication d'un dispositif connecteur (1) selon l'une quelconque des revendications précédentes, **caractérisé en ce qu'**on procède à la vidange de la cuve (90) avant d'extraire le dispositif connecteur (1).

7. Procédé de fabrication d'un dispositif connecteur (1) selon l'une revendication 1 à 6, **caractérisé en ce qu'**on positionne les conducteurs (2) dans une position écartée (Eₓ) tel que l'écart soit supérieur à l'épaisseur de résine d'imprégnation (36) souhaitée pour ensuite rapprocher les conducteurs (2) avant l'étape de vidange si celle-ci existe ou sinon avant l'étape d'extraction de la cuve (90).

8. Procédé de fabrication d'un dispositif connecteur (1) selon l'une des revendications 1 à 7, **caractérisé en ce que** lesdits conducteurs plats (2) sont disposés de manière inclinée dans la cuve (90), la normale au plan correspondant à la plus grande surface du dispositif (1), en tant que produit fini, étant inclinée par rapport à la verticale d'un angle compris entre 45° et 85°.

9. Procédé de fabrication d'un dispositif connecteur (1) selon l'une des revendications 1 à 8, **caractérisé en ce que** pour préparer les conducteurs plats (2) on dépose au moins une couche de résine d'émaillage (35) d'épaisseur A sur lesdits conducteurs (2), pour ensuite réticuler ladite résine d'émaillage (35).

10. Procédé de fabrication d'un dispositif connecteur (1) selon l'une des revendications 1 à 9, **caractérisé en ce qu'**on prépare les conducteurs plats (2) par au moins une étape de traitement des surfaces.

11. Dispositif connecteur (1) obtenu via le procédé de fabrication selon l'une des revendications 1 à 10, **caractérisé en ce qu'**il comprend au moins deux conducteurs plats (2) et au moins un matériau isolant comportant ladite résine d'imprégnation (36) et ayant également fonction d'assemblage des conducteurs plats (2).

12. Dispositif connecteur (1) selon la revendication précédente, **caractérisé en ce qu'**au moins une résine (35, 36) comprend au moins un agent de charge sous forme de particules inorganiques.

13. Moyens pour la mise en oeuvre du procédé selon l'une quelconque des revendication 1 à 10, **caractérisés en ce que** les moyens comprennent une cuve (90) et un dispositif de positionnement géométrique (40) des conducteurs plats (2) tel que les conducteurs soient maintenus parallèles et écartés d'une valeur au moins égale à l'épaisseur de l'isolant souhaitée, lequel dispositif de positionnement (40) n'engendrant pas de contraintes spatiales au niveau des dimensions externes dudit dispositif connecteur (1) et les conducteurs (2) sont positionnées de manière à ce que la normale au plan correspondant à la plus grande surface du dispositif 1, en tant que produit fini, soit inclinée par rapport à l'axe vertical d'un angle compris entre 45° et 85°.

14. Utilisation du dispositif connecteur (1) selon l'une quelconque des revendications 11 ou 12 ou du dispositif connecteur (1) obtenu en mettant en oeuvre le procédé de fabrication selon l'une quelconque des revendications 1 à 10, en tant que connecteur inter ou intra convertisseur(s) statique(s) d'énergie électrique.

## Patentansprüche

1. Verfahren zur Herstellung einer mehrschichtigen Verbindungsvorrichtung (1), die geeignet ist, eine Verbindung zwischen statischen Stromwandlern oder innerhalb eines statischen Stromwandlers für elektrische Energie herzustellen, wobei die Vorrichtung (1) mindestens zwei flache Leiter (2) und mindestens ein zwischen den beiden vorgenannten Leitern (2) angeordnetes Isoliermaterial umfasst, wobei das Verfahren **dadurch gekennzeichnet ist, dass**:
• man die flachen, gegebenenfalls vorbereiteten Leiter (2) in einen Behälter (90) in einer geometrischen Position positioniert, so dass die Leiter (2) parallel und um einen Wert beabstandet gehalten werden, der mindestens gleich der Dicke der gewünschten elektrischen Isolierung ist, wobei die Leiter (2) eine bevorzugte Ausrichtung haben,
• man die vorbereiteten flachen Leiter (2) mit mindestens einem in den Behälter (90) eingegebenen Imprägnierharz (36) imprägniert, so dass der Pegel des Imprägnierharzes (36) in dem Behälter (90) allmählich ansteigt, wobei das Imprägnierharz (36) physikalisch-chemische Eigenschaften aufweist, die es ermöglichen, dass es nach der Entnahme aus dem Behälter (90) in Form einer Überzugsschicht auf der Gesamtheit der zugänglichen Flächen der flachen Leiter (2) verbleibt,
• man die Vorrichtung (1) aus dem Behälter (90) entnimmt,
• man fortfährt mit der Vernetzung des Imprägnierharzes (36), um die flachen Leiter mit Hilfe des Imprägnierharzes (36) zusammenzufügen.

2. Verfahren zur Herstellung einer Verbindervorrichtung (1) nach Anspruch 1, **dadurch gekennzeichnet, dass** man die Leiter (2) in einer Positionierungsvorrichtung (40) anordnet, die keine räumlichen Randbedingungen bezüglich der Außenabmessungen der Vorrichtung (1) erzeugt, bevor man das Imprägnierharz (36) eingibt.

3. Verfahren zur Herstellung einer Verbindervorrichtung (1) nach Anspruch 1 oder 2, **dadurch gekennzeichnet, dass** Abdeckungen (60) angebracht werden, um leitende Oberflächen der flachen Leiter (2) vor einer Bedeckung durch Harz zu schützen, und/oder Abstandshalter (32) angebracht werden, um die flachen Leiter (2) voneinander beabstandet zu halten.

4. Verfahren zur Herstellung einer Verbindungsvorrichtung (1) nach einem der Ansprüche 1 bis 3, **dadurch gekennzeichnet, dass** die Imprägnierung durch Aufsteigen des Imprägnierharzes (36) zwischen den Bestandteilen der Vorrichtung (1) erfolgt.

5. Verfahren zur Herstellung einer Verbindungsvorrichtung (1) nach einem der Ansprüche 1 bis 4, **dadurch gekennzeichnet, dass** ein geschlossener Behälter (90) verwendet wird und das Verfahren mindestens einen der folgenden Schritte umfasst: einen Schritt zum Unterdrucksetzen des Behälters (90), einen Schritt zum Teilvakuumieren des Behälters (90), einen Schritt zum Unterdrucksetzen des Behälters (90), wobei jeder Schritt mindestens einmal durchgeführt wird.

6. Verfahren zur Herstellung einer Verbindungsvorrichtung (1) nach einem der vorhergehenden Ansprüche, **dadurch gekennzeichnet, dass** der Behälter (90) entleert wird, bevor die Verbindungsvorrichtung (1) entnommen wird.

7. Verfahren zur Herstellung einer Verbindervorrichtung (1) nach einem der Ansprüche 1 bis 6, **dadurch gekennzeichnet, dass** man die Leiter (2) in einer beabstandeten Position (Eₓ) derart positioniert, dass der Abstand größer ist als die gewünschte Dicke des Imprägnierharzes (36), um dann die Leiter (2) vor dem Schritt des Entleerens, falls dieser existiert, oder ansonsten vor dem Schritt des Herausziehens des Behälters (90) aneinander anzunähern.

8. Verfahren zur Herstellung einer Verbindervorrichtung (1) nach einem der Ansprüche 1 bis 7, **dadurch gekennzeichnet, dass** die flachen Leiter (2) schräg in dem Behälter (90) angeordnet sind, wobei die Normale zu der Ebene, die der größten Oberfläche der Vorrichtung (1) als fertiges Produkt entspricht, gegenüber der Vertikalen um einen Winkel zwischen 45° und 85° geneigt ist.

9. Verfahren zur Herstellung einer Verbindervorrichtung (1) nach einem der Ansprüche 1 bis 8, **dadurch gekennzeichnet, dass** zur Vorbereitung der flachen Leiter (2) mindestens eine Schicht aus Emaillierharz (35) mit der Dicke A auf die Leiter (2) aufgebracht wird, um anschließend das Emaillierharz (35) zu vernetzen.

10. Verfahren zur Herstellung einer Verbindervorrichtung (1) nach einem der Ansprüche 1 bis 9, **dadurch gekennzeichnet, dass** man die flachen Leiter (2) durch mindestens einen Schritt der Oberflächenbehandlung vorbereitet.

11. Verbindervorrichtung (1), die über das Herstellungsverfahren nach einem der Ansprüche 1 bis 10 erhalten wird, **dadurch gekennzeichnet, dass** sie mindestens zwei flache Leiter (2) und mindestens ein isolierendes Material umfasst, das das Imprägnierharz (36) umfasst und auch die Funktion hat, die flachen Leiter (2) miteinander zu verbinden.

12. Verbindervorrichtung (1) nach dem vorhergehenden Anspruch, **dadurch gekennzeichnet, dass** mindestens ein Harz (35, 36) mindestens einen Füllstoff in Form von anorganischen Partikeln umfasst.

13. Mittel zur Durchführung des Verfahrens nach einem der Ansprüche 1 bis 10, **dadurch gekennzeichnet, dass** die Mittel einen Behälter (90) und eine Vorrichtung (40) zur geometrischen Positionierung der flachen Leiter (2) umfassen, so dass die Leiter parallel und um einen Wert beabstandet gehalten werden, der mindestens gleich der gewünschten Isolationsdicke ist, wobei die Positionierungsvorrichtung (40) keine räumlichen Randbedingungen in Bezug auf die äußeren Abmessungen der Verbindungsvorrichtung (1) erzeugt und die Leiter (2) so positioniert sind, dass die Normale zu der Ebene, die der größten Oberfläche der Vorrichtung 1 als fertiges Produkt entspricht, gegenüber der vertikalen Achse um einen Winkel zwischen 45° und 85° geneigt ist.

14. Verwendung der Verbindervorrichtung (1) nach einem der Ansprüche 11 oder 12 oder der Verbindervorrichtung (1), die durch Durchführung des Herstellungsverfahrens nach einem der Ansprüche 1 bis 10 erhalten wurde, als Verbinder zwischen statischen Stromwandlern oder innerhalb eines statischen Stromwandlers für elektrische Energie.

## Claims

1. A method of manufacturing a multilayer connector device (1) suitable for making an inter or intra static electrical energy converter(s) connection, said device (1) comprising at least two flat conductors (2) and at least one insulating material disposed between the two above-mentioned conductors (2), said method being **characterized in that**:
• the flat conductors (2), possibly prepared, are positioned in a tank (90) in a geometric position such that the conductors (2) are kept parallel and spaced apart by a value at least equal to the thickness of the desired electrical insulation, said conductors (2) having a preferential orientation,
• said prepared flat conductors (2) are impregnated with at least one impregnating resin (36) introduced into the tank (90), so that the level of impregnating resin (36) gradually rises in the tank (90), said impregnating resin (36) having physico-chemical characteristics enabling, after extraction from the tank, it to be maintained in the form of a coating layer on all the accessible faces of said flat conductors (2),
• the device (1) is removed from said tank (90),
• the said impregnating resin (36) is cross-linked to assemble the flat conductors by means of the said impregnating resin (36).

2. A method of manufacturing a connector device (1) according to claim 1, **characterized in that** the conductors (2) are placed in a positioning device (40) which does not generate spatial constraints in the external dimensions of said device (1) before the impregnation resin (36) is introduced.

3. A method for producing a connector device (1) according to claim 1 or 2, **characterized in that** masks (60) are applied to protect conductive surfaces of the flat conductors (2) from being covered with resin and/or spacers (32) are applied to keep the flat conductors (2) spaced apart.

4. A method of manufacturing a connector device (1) according to any one of claims 1 to 3, **characterized in that** impregnation is carried out by raising the impregnating resin (36) between the component parts of the device (1).

5. A method of manufacturing a connector device (1) according to one of claims 1 to 4, **characterized in that** a closed tank (90) is used and the method comprises at least one step among: a step of depressurizing the tank (90), a step of putting the tank (90) under partial vacuum, a step of pressurizing the tank (90), each step being performed at least once.

6. A method of manufacturing a connector device (1) according to any one of the preceding claims, **characterized in that** the tank (90) is emptied before the connector device (1) is extracted.

7. A method of manufacturing a connector device (1) according to one of claims 1 to 6, **characterized in that** the conductors (2) are positioned in a spaced apart position (Eₓ) such that the distance is greater than the desired thickness of impregnating resin (36) and then the conductors (2) are brought closer together before the emptying step if this exists or otherwise before the step of extracting the tank (90).

8. A method of manufacturing a connector device (1) according to one of claims 1 to 7, **characterized in that** said flat conductors (2) are arranged inclinedly in the tank (90), the normal to the plane corresponding to the largest surface of the device (1), as a finished product, being inclined relative to the vertical by an angle of between 45° and 85°.

9. A method of manufacturing a connector device (1) according to one of claims 1 to 8, **characterized in that** for preparing the flat conductors (2) at least one layer of enameling resin (35) of thickness A is applied to said conductors (2), and said enameling resin (35) is then crosslinked.

10. A method of manufacturing a connector device (1) according to one of claims 1 to 9, **characterized in that** the flat conductors (2) are prepared by at least one surface treatment step.

11. Connector device (1) obtained by the manufacturing process according to one of claims 1 to 10, **characterized in that** it comprises at least two flat conductors (2) and at least one insulating material comprising said impregnation resin (36) and also having an assembly function of flat conductors (2).

12. Connector device (1) according to the preceding claim, **characterized in that** at least one resin (35, 36) comprises at least one filler in the form of inorganic particles.

13. Means for carrying out the process according to any one of claims 1 to 10, **characterized in that** the means comprise a tank (90) and a device (40) for geometrically positioning the flat conductors (2) such that the conductors are kept parallel and spaced apart by a value at least equal to the thickness of the desired insulation, which positioning device (40) does not generate spatial constraints on the external dimensions of said connector device (1) and the conductors (2) are positioned in such a way that the normal to the plane corresponding to the largest surface of device 1, as a finished product is inclined with respect to the vertical axis by an angle of between 45° and 85°.

14. Use of the connector device (1) according to any one of claims 11 or 12 or of the connector device (1) obtained by carrying out the manufacturing process according to any of claims 1 to 10, as an inter or intra static energy converter connector(s).
